# FASCICULE DE BREVET EUROPEEN

(11) **EP 2 628 419 B1**
(45) Date de publication et mention de la délivrance du brevet: **19.03.2014**
(21) Numéro de dépôt: 13305149.0
(22) Date de dépôt: 07.02.2013
(51) Int. Cl.: A47J 27/00, A47J 27/14, A47J 37/12

(54) **Sauteuse basculante à induction**
Kippbares Induktionsgefäß
Tilting induction vessel

(30) Priorité: 20.02.2012 FR 1251527
(43) Date de publication de la demande: 21.08.2013
(73) Titulaire: G.D.V. Productions, 89000 Auxerre (FR); Enodis France, 89000 Auxerre (FR)
(72) Inventeur: Galoo, Philippe, 89000 AUXERRE (FR); Houpert, François, 77630 BARBIZON (FR)
(74) Mandataire: Cabinet Laurent & Charras

(56) Documents cités:
- EP-A1- 1 961 352
- FR-A1- 2 414 276
- US-A- 3 797 377
- US-A- 3 964 378
- US-A- 5 386 102

## Description

### DOMAINE TECHNIQUE

La présente invention à trait à un appareil de cuisson et/ou de friture, communément appelé sauteuse basculante, particulièrement destiné à des applications de restauration collective ou de cuisines dites professionnelles ou similaire.

### ART ANTERIEUR

Dans le domaine de la restauration collective et des cuisines professionnelles équipant les restaurants notamment, il est bien connu un dispositif de cuisson et/ou de friture communément appelé sauteuse basculante.

Une sauteuse basculante est usuellement constituée d'un bâti formant caisson support d'une cuve de cuisson ou de friture, ladite cuve étant montée pivotante sur le caisson support entre les colonnes, des moyens dits de basculement coopérant avec la cuve de manière à la faire basculer d'une position dite de cuisson où l'ouverture de la cuve est positionnée vers le haut jusqu'à une position dite de vidange où l'ouverture de la cuve est positionnées vers l'avant du caisson support et inversement, et des moyens de chauffage aptes à chauffer le contenu de la cuve.

Les moyens de chauffage sont généralement constitués de moyens de chauffage électriques, usuellement une résistance électrique, ou de moyens de chauffage au gaz.

C'est le cas notamment des brevets américains US 3,964,378 et US 3,797,377 notamment.

Le brevet américain US 3,964,378 décrit une sauteuse basculante comportant un mécanisme de basculement pour faire pivoter la cuve et verser un fluide de cuisson ou de l'eau de nettoyage à travers un bec verseur. Un bac de récupération est monté de manière amovible à l'avant de la sauteuse sous le bord du bec verseur de la cuve. Ledit bac de récupération comporte une sortie dans le fond connectée à un bec mobile pour diriger le liquide éjecté vers un réservoir externe ou à un siphon.

Par ailleurs, le brevet américain US 3,797,377 décrit une sauteuse basculante comprenant une cuve de cuisson articulée sur la face avant d'un bâti formant caisson support. Les moyens de basculement de la cuve de cuisson sont constitués d'une barre dite d'actionnement rigide dont une première extrémité est articulée à la cuve de cuisson, derrière et au dessus de l'axe de rotation de la cuve de cuisson, et dont l'autre extrémité est articulée à un chariot coulissant le long d'une vis sans fin de telle manière que le déplacement du chariot provoque la rotation de la cuve de cuisson depuis une position dite de cuisson où l'ouverture de la cuve est positionnée vers le haut jusqu'à une position dite de vidange où l'ouverture de la cuve est positionnées vers l'avant du caisson support et inversement.

Toutes ce sauteuses présentent l'inconvénient d'être lourdes, encombrantes et difficiles à nettoyer. Par ailleurs, les moyens de chauffage électriques ou au gaz présentent des délais de réchauffement et/ou de refroidissement assez long ainsi que l'inconvénient de ne pas permettre un réglage de la puissance de cuisson suffisamment précis, notamment pour une cuisson dite à feu doux, et d'être très énergivores.

### EXPOSE DE L'INVENTION

L'un des buts de l'invention est donc de remédier à ces inconvénients en proposant une sauteuse basculante de conception simple et peu onéreuse, procurant une efficacité de réchauffement optimale ainsi qu'une facilité de nettoyage.

A cet effet, et conformément à l'invention, il est proposé un dispositif de cuisson et/ou de friture, particulièrement destiné à des applications de restauration professionnelle, collective ou similaire, comprenant au moins un bâti constitué de deux colonnes verticales reliées par une paroi de fond et formant caisson support d'une cuve de cuisson ou de friture, ladite cuve étant montée pivotante sur le caisson support entre les colonnes, des moyens dits de basculement coopérant avec la cuve de manière à la faire basculer d'une position dite de cuisson où l'ouverture de la cuve est positionnée vers le haut jusqu'à une position dite de vidange où l'ouverture de la cuve est positionnées vers l'avant du caisson support et inversement, et des moyens de chauffage aptes à chauffer le contenu de la cuve; ledit dispositif est remarquable en ce que la cuve est constituée d'au moins un caisson sensiblement parallélépipédique comportant une paroi de fond et quatre paroi latérales sur le bord supérieur desquelles prend appui un bac de cuisson amovible, deux parois latérales opposées du caisson comportant respectivement un axe prenant respectivement appui sur un pallier solidaire d'une colonne, au moins l'une des colonnes recevant un générateur de commande de fréquence électrique adapté pour générer une tension électrique transmise par un câble d'alimentation à au moins une bobine d'induction positionnée dans le caisson de telle manière que l'axe du flux électromagnétique généré par ladite bobine soit dirigé vers l'intérieur du bac de cuisson, l'axe porté par le palier de la colonne recevant le générateur étant creux pour permettre le passage dudit câble d'alimentation.

De manière avantageuse, la paroi de fond du caisson comporte au moins une lumière et au moins un ventilateur solidaire de la paroi de fond, s'étendant dans le caisson, et s'étendant au droit de ladite lumière.

Par ailleurs, la paroi de fond comporte au moins un filtre positionné dans un carter solidaire de la face externe de la paroi de fond et s'étendant au droit du ventilateur.

De plus, la paroi de fond du caisson comporte au moins une seconde lumière coiffée par une grille munie d'une pluralité d'évents, ladite grille munie d'évents étant solidaire de la face externe de la paroi de fond du caisson.

Lesdits évents sont, de préférence, orientés vers la face avant du caisson formant la cuve.

De préférence, la paroi de fond du caisson et les parois latérales sont solidaires d'un cadre parallélépipédique dont deux côtés opposés portent les axes de rotation de la cuve.

Avantageusement, le bac amovible comporte sur le bord supérieur de sa face avant un bec verseur.

De plus, l'extrémité libre de l'un des axes comporte une bielle articulée à un piston d'un vérin positionné dans l'une des colonnes du caisson support.

Accessoirement, le dispositif comporte un couvercle apte à coiffer le bac amovible et articulé au caisson support.

### DESCRIPTION SOMMAIRE DES FIGURES

D'autres avantages et caractéristiques ressortiront mieux de la description qui va suivre, d'une unique variante d'exécution, donnée à titre d'exemple non limitatif, du dispositif de cuisson et/ou de friture suivant l'invention, en référence aux dessins annexés sur lesquels :
- la figure 1 est une vue en perspective du dispositif de cuisson et/ou de friture suivant l'invention en position de cuisson,
- la figure 2 est une vue en coupe sagittale du dispositif de cuisson et/ou de friture suivant l'invention représenté sur la figure 1,
- la figure 3 est une vue en perspective déchirée suivant un plan de coupe frontal du dispositif de cuisson et/ou de friture suivant l'invention,
- la figure 4 est une vue de côté déchirée du dispositif de cuisson et/ou de friture suivant l'invention,
- la figure 5 est une vue en perspective du dispositif de cuisson et/ou de friture suivant l'invention en position de vidange,
- la figure 6 est une vue en perspective éclatée de la cuve du dispositif de cuisson et/ou de friture suivant l'invention,
- la figure 7 est une vue en coupe sagittale de la cuve du dispositif de cuisson et/ou de friture suivant l'invention,
- la figure 8 est une vue de dessous de la cuve du dispositif de cuisson et/ou de friture suivant l'invention.

### DESCRIPTION DETAILLEE DE L'INVENTION

Par souci de clarté, dans la suite de la description, les mêmes éléments ont été désignés par les mêmes références aux différentes figures. De plus, les diverses vues ne sont pas nécessairement tracées à l'échelle et les dimensions des éléments peuvent avoir été exagérées pour faciliter la compréhension de l'invention.

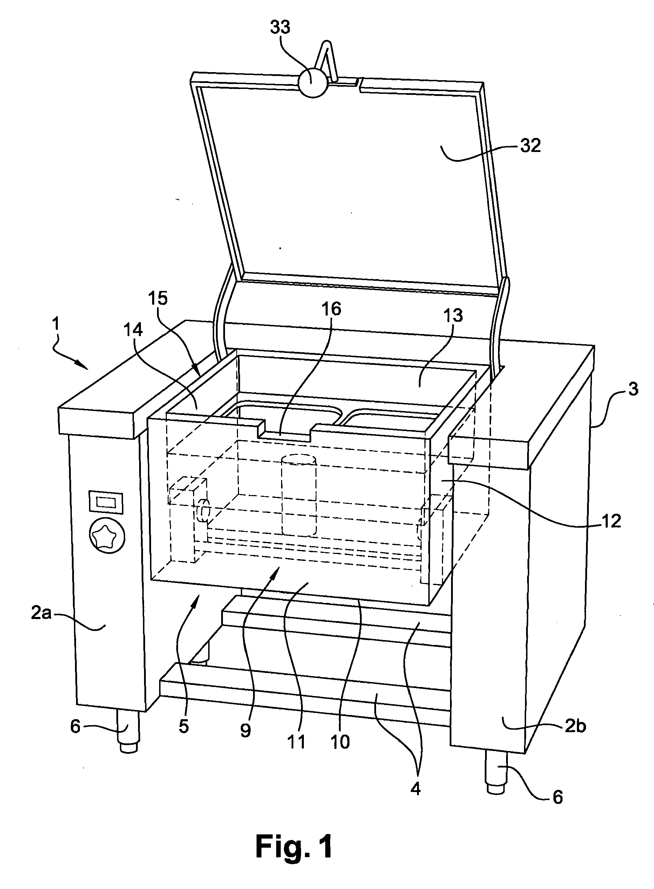

En référence aux figures 1 à 5, le dispositif de cuisson et/ou de friture, particulièrement destiné à des applications de restauration collective ou similaire, suivant l'invention comprend un bâti (1) constitué de deux colonnes verticales (2a,2b) reliées par une paroi de fond (3) et deux longerons inférieurs (4). Ledit bâti (1) forme ainsi un caisson support d'une cuve (5) de cuisson ou de friture, ladite cuve (5) étant montée pivotante sur le caisson support entre les colonnes (2a,2b). On entend par cuisson l'action de cuire ou de faire cuire un aliment qu'il s'agisse d'une cuisson par contact et/ou d'une cuisson en bain.

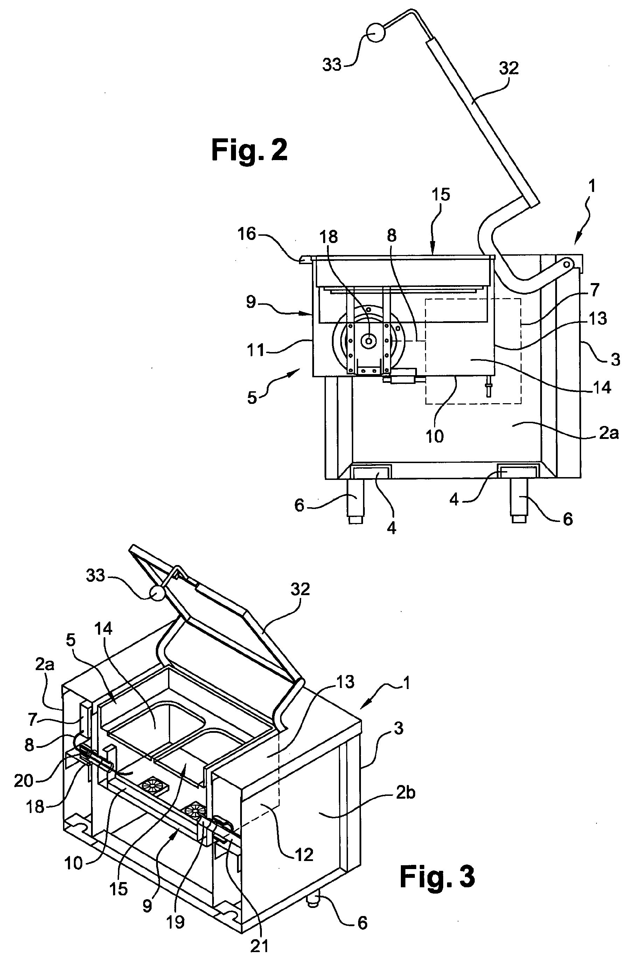

Chaque colonne (2a,2b) présente une forme parallélépipédique, obtenue à partir de tôles en inox, et comporte respectivement une paire de pieds (6) avantageusement réglable en hauteur. Une première colonne (2a), en l'espèce la colonne de gauche, en référence aux figures 2 et 3, comporte un générateur de commande de fréquence électrique (7) adapté pour générer une tension électrique transmise par un câble d'alimentation (8) à au moins une bobine d'induction positionnée dans la cuve (5) comme il sera décrit plus en détail un peu plus loin. On notera que, outre une grande précision de réglage de l'intensité de la cuisson, la ou les bobines d'induction nécessitent une consommation d'énergie nettement inférieure aux autres modes de cuisson que sont les résistances électriques ou les brûleurs de gaz.

Il est bien évident que les pieds (6) pourront être substitués par des roulettes ou similaire sans pour autant sortir du cadre de l'invention.

Ladite cuve (5), en référence aux figures 1,2,3,5,6 et 7, constituée d'un caisson (9) sensiblement parallélépipédique comportant une paroi de fond (10) et quatre paroi latérales (11), (12), (13) et (14) sur le bord supérieur desquelles prend appui un bac de cuisson amovible (15). De manière avantageuse, le bac de cuisson amovible (15) comporte sur le bord supérieur de sa face avant un bec verseur (16) afin de faciliter la vidange de ce dernier.

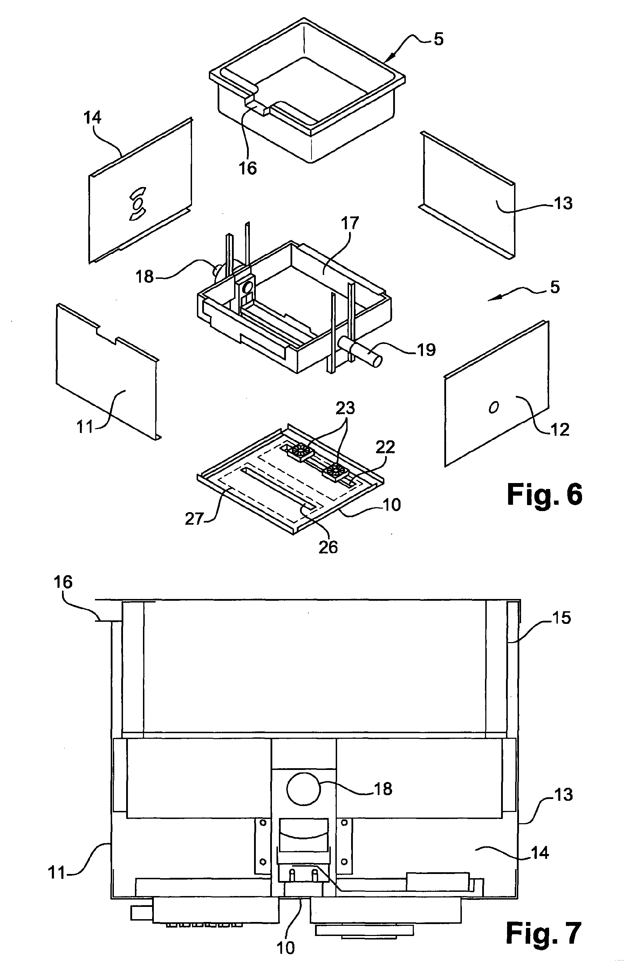

De préférence, en référence à la figure 6, la paroi de fond (10) du caisson (9) et les parois latérales (11), (12), (13) et (14) sont solidaires d'un cadre parallélépipédique (17), sensiblement carré dans cet exemple particulier de réalisation, dont deux côtés opposés portent des axes (18) et (19) de rotation de la cuve (5), lesdits axes (18) et (19) étant coaxiaux.

Ainsi, en référence aux figures 3 et 6, deux parois latérales opposées (12,14) du caisson (5) comportent respectivement un axe (18,19) prenant respectivement appui sur un pallier (20,21) solidaire d'une colonne (2a,2b), la colonne (2a) recevant le générateur de commande de fréquence électrique (7) adapté pour générer une tension électrique transmise par un câble d'alimentation (8) à au moins une bobine d'induction, non représentée sur les figures, positionnée dans le caisson (5) de telle manière que l'axe du flux électromagnétique généré par ladite bobine soit dirigé vers l'intérieur du bac de cuisson (15), l'axe (18) porté par le palier (20) de la colonne (2a) recevant le générateur étant creux pour permettre le passage dudit câble d'alimentation (8).

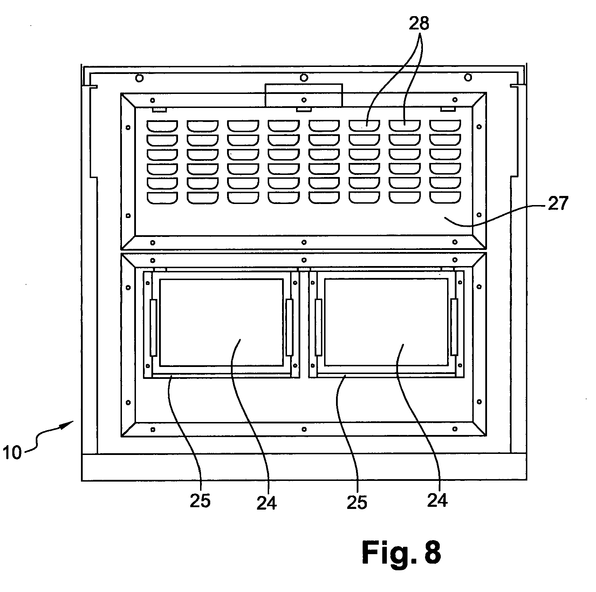

De manière avantageuse, en référence aux figures 6 et 8, la paroi de fond (10) du caisson (5) comporte une lumière (22) et deux ventilateurs (23) solidaires de la paroi de fond (10), s'étendant dans ledit caisson au droit de ladite lumière (21). Ladite paroi de fond (10) comporte également deux filtres (24) respectivement positionnés dans un carter (25) solidaire de la face externe de la paroi de fond (10) et s'étendant au droit des ventilateurs (23). Dans cet exemple particulier de réalisation, ladite lumière (22) présente une forme sensiblement rectiligne s'étendant sensiblement d'un bord à l'autre de la plaque de fond (10).

Il est bien évident que la plaque de fond (10) pourra comporter une pluralité de lumières (22) et au moins un ventilateur (23) sans pour autant sortir du cadre de l'invention.

De plus, la paroi de fond (10) du caisson (5) comporte une seconde lumière (26) coiffée par une grille (27) munie d'une pluralité d'évents (28), ladite grille (27) munie d'évents (28) étant solidaire de la face externe de la paroi de fond (10) du caisson (5). Lesdits évents (28) sont, de préférence, orientés vers la face avant du caisson (5) formant la cuve de telle manière que de l'eau ne puisse pas ruisseler à l'intérieur de la cuve lors de son nettoyage.

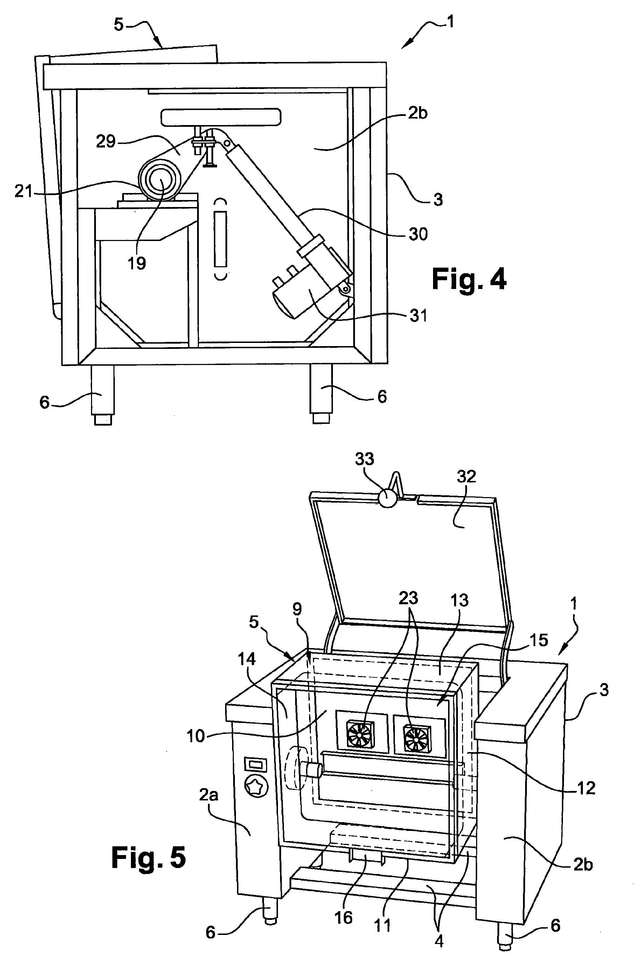

Par ailleurs, en référence à la figure 4, le dispositif suivant l'invention comporte des moyens dits de basculement coopérant avec la cuve (5) de manière à la faire basculer d'une position dite de cuisson où l'ouverture de la cuve (5) est positionnée vers le haut jusqu'à une position dite de vidange où l'ouverture de la cuve est positionnées vers l'avant du caisson support (1) et inversement. Ces moyens de basculement consiste en une bielle (29) solidaire de l'axe (19) de la cuve (5) monté sur le palier (21) et en un vérin électrique (30) dont l'extrémité libre est articulée à l'extrémité libre de la bielle (29), ledit vérin électrique (30) étant solidaire de la colonne (2b) et entraîné par un moto-réducteur (31).

Il va de soi que les moyens de basculement pourront consister dans tout autre moyen de basculement approprié, qu'il soit manuel ou automatisé, connu de l'Homme du Métier sans pour autant sortir du cadre de l'invention.

Accessoirement, en référence aux figures 1, 2, 3 et 5, le dispositif comporte un couvercle (32) muni d'une poignée (33), apte à coiffer le bac amovible et articulé au caisson support (1).

Il va de soi que le couvercle (32) pourrait ne pas être articulé sans pour autant sortir du cadre de l'invention.

De manière avantageuse, le générateur de commande de fréquence électrique (7) alimentant la ou les bobines d'induction pourra être connecté à un système de gestion d'énergie tel que le système de gestion décrit dans la demande de brevet européen EP 0 053 383 et la demande de brevet allemand DE 19842043 et commercialisé par la société allemande SICOTRONIC®, ou tout autre système de gestion d'énergie connu de l'homme du métier, et/ou être piloté à distance par tout moyen approprié bien connu de l'homme du métier.

Il est bien évident que le dispositif de cuisson et/ou friture suivant l'invention pourra présenter différentes dimensions et/ou comporter un ou plusieurs bacs de cuisson amovibles (15) et/ou une ou plusieurs cuves (5) sans pour autant sortir du cadre de l'invention.

Par ailleurs, il va de soi que le dispositif suivant l'invention pourra être encastré dans des modules de cuisson plus complet, tels que des modules de cuisson comportant un ou des fours et/ou des plaques de cuisson et/ou un module de cuisson comportant des équipements de cuisson du type « Wok » et/ou un ou des planchas, par exemple.

Enfin, il est bien évident que les exemples que l'on vient de donner ne sont que des illustrations particulières en aucun cas limitatives quant aux domaines d'application de l'invention.

## Revendications

1. Dispositif de cuisson et/ou de friture, particulièrement destiné à des applications de restauration collective ou similaire, comprenant au moins un bâti (1) constitué de deux colonnes verticales (2a,2b) reliées par une paroi de fond (3) et formant caisson support d'une cuve (5) de cuisson et/ou de friture, ladite cuve (5) étant montée pivotante sur le caisson support (1) entre les colonnes (2a,2b), des moyens dits de basculement coopérant avec la cuve (5) de manière à la faire basculer d'une position dite de cuisson où l'ouverture de la cuve (5) est positionnée vers le haut jusqu'à une position dite de vidange où l'ouverture de la cuve (5) est positionnées vers l'avant du caisson support (1) et inversement, et des moyens de chauffage aptes à chauffer le contenu de la cuve, où la cuve (5) est constituée d'au moins un caisson (9) sensiblement parallélépipédique comportant une paroi de fond (10) et quatre paroi latérales (11,12,13,14) sur le bord supérieur desquelles prend appui un bac de cuisson amovible (15), deux parois latérales opposées (12,14) du caisson (9) comportant respectivement un axe (18,19) prenant respectivement appui sur un pallier (20,21) solidaire d'une colonne (2a,2b), au moins l'une des colonnes (2a) recevant un générateur de commande de fréquence électrique (7) adapté pour générer une tension électrique transmise par un câble d'alimentation (8) à au moins une bobine d'induction positionnée dans le caisson (9) de telle manière que l'axe du flux électromagnétique généré par ladite bobine soit dirigé vers l'intérieur du bac de cuisson (15), l'axe (18) porté par le palier (20) de la colonne (2a) recevant le générateur (7) étant creux pour permettre le passage dudit câble d'alimentation (8).

2. Dispositif suivant la revendication précédente ***caractérisé* en ce que** la paroi de fond (10) du caisson (9) comporte au moins une lumière (22) et au moins un ventilateur (23) solidaire de la paroi de fond (10), s'étendant dans le caisson (9), et s'étendant au droit de ladite lumière (22).

3. Dispositif suivant la revendication 2 ***caractérisé* en ce que** la paroi de fond (10) comporte au moins un filtre (24) positionné dans un carter (25) solidaire de la face externe de la paroi de fond (10) et s'étendant au droit du ventilateur (23).

4. Dispositif suivant l'une quelconque des revendications 1 à 3 ***caractérisé* en ce que** la paroi de fond (10) du caisson (9) comporte au moins une seconde lumière (26) coiffée par une grille (27) munie d'une pluralité d'évents (28), ladite grille (27) munie d'évents (28) étant solidaire de la face externe de la paroi de fond (10) du caisson (9).

5. Dispositif suivant la revendication 4 ***caractérisé* en ce que** lesdits évents (28) sont orientés vers la face avant du caisson (9) formant la cuve (5).

6. Dispositif suivant l'une quelconque des revendications 1 à 5 ***caractérisé* en ce que** la paroi de fond (10) du caisson (9) et les parois latérales (11,12,13,14) sont solidaires d'un cadre parallélépipédique (17) dont deux côtés opposés portent les axes (18,19) de rotation de la cuve (5).

7. Dispositif suivant l'une quelconque des revendications 1 à 6 ***caractérisé* en ce que** le bac amovible (15) comporte sur le bord supérieur de sa face avant un bec verseur (16).

8. Dispositif suivant l'une quelconque des revendications 1 à 7 ***caractérisé* en ce que** l'extrémité libre de l'un des axes comporte une bielle (29) articulée à un piston d'un vérin (30) positionné dans l'une des colonnes (2a) du caisson support (1).

9. Dispositif suivant l'une quelconque des revendications 1 à 8 ***caractérisé* en ce qu'il** comporte un couvercle (32) apte à coiffer le bac amovible (15) et articulé au caisson support (1).

## Patentansprüche

1. Koch- und/oder Frittiervorrichtung, insbesondere bestimmt für Großküchenanwendungen oder dergleichen, umfassend mindestens ein Gehäuse (1), das aus zwei vertikalen Ständern (2a, 2b) besteht, die durch eine Rückwand (3) verbunden sind und einen Tragkasten für eine Koch- und/oder Frittierwanne (5) bilden, wobei die Wanne (5) schwenkbar am Tragkasten (1) zwischen den Ständern (2a, 2b) angebracht ist, wobei sogenannte Kippeinrichtungen mit der Wanne (5) zusammenwirken, um sie von einer sogenannten Kochposition, in der die Öffnung der Wanne (5) nach oben positioniert ist, in eine sogenannte Entleerungsposition, in der die Öffnung der Wanne (5) zur Vorderseite des Tragkastens (1) hin positioniert ist, und umgekehrt kippen zu lassen, und Erwärmungseinrichtungen, die in der Lage sind, den Inhalt der Wanne zu erwärmen, wobei die Wanne (5) aus mindestens einem im Wesentlichen quaderförminen Kasten (9) besteht, der eine Bodenwand (10) und vier Seitenwände (11, 12, 13, 14) aufweist, an deren oberem Rand ein herausnehmbarer Kochbehälter (15) aufliegt, wobei zwei entgegengesetzte Seitenwände (12, 14) des Kastens (9) jeweils eine Achse (18, 19) aufweisen, die jeweils auf einem Lager (20, 21) aufliegen, das fest mit einem Ständer (2a, 2b) verbunden ist, wobei zumindest einer der Ständer (2a) einen Elektrofrequenzsteuergenerator (7) aufnimmt, der dazu angepasst ist, eine elektrische Spannung zu erzeugen, die über ein Speisekabel (8) an mindestens eine im Kasten (9) angeordnete Induktionsspule übertragen wird, so dass die Achse des elektromagnetischen Flusses, der von der Spule erzeugt wird, in das Innere des Kochbehälters (15) gerichtet ist, wobei die vom Lager (20) des den Generator (7) aufnehmenden Ständers (2a) getragene Achse (18) hohl ist, um den Durchhang des Speisekabels (8) zu ermöglichen.

2. Vorrichtung nach dem vorhergehenden Anspruch, **dadurch gekennzeichnet, dass** die Bodenwand (10) des Kastens (9) mindestens eine Öffnung (22) aufweist, und dass sich mindestens ein Ventilator (23), der fest mit der Bodenwand (10) verbunden ist, in den Kasten (9) erstreckt und sich in der Geraden der Öffnung (22) erstreckt.

3. Vorrichtung nach Anspruch 2, dadurch gekenntzeichnet, dass die Bodenwand (10) mindestens einen Filter (24) aufweist, der in einem Gehäuse (25) angeordnet ist, das fest mit der Außenfläche der Bodenwand (10) verbunden ist und sich in der Geraden des Ventilators (23) erstreckt.

4. Vorrichtung nach einem der Ansprüche 1 bis 3, dadurch gekenntzeichnet, dass die Bodenwand (10) des Kastens (9) mindestens eine zweite Öffnung (26) aufweist, die mit einem Gitter (27) abgedeckt ist, das mit einer Vielzahl von Luftauslässen (28) versehen ist, wobei das mit Luftauslässen (28) versehene Gitter (27) fest mit der Außenfläche der Bodenwand (10) des Kastens (9) verbunden ist.

5. Vorrichtung nach Anspruch 4, **dadurch gekennzeichnet, dass** die Luftauslässe (28) zur Vorderseite des die Wanne (5) bildenden Kastens (9) gerichtet sind.

6. Vorrichtung nach einem der Ansprüche 1 bis 5, dadurch gekenntzeichnet, dass die Bodenwand (10) des Kastens (9) und die Seitenwände (11, 12, 13, 14) fest mit einem quaderförmigen Rahmen (17) verbunden sind, dessen zwei entgegengesetzte Seiten die Drehachsen (18, 19) der Wanne (5) tragen.

7. Vorrichtung nach einem der Ansprüche 1 bis 6, **dadurch gekennzeichnet, dass** der herausnehmbare Behälter (15) am oberen Rand seiner Vorderseite eine Ausgießertülle (16) aufweist.

8. Vorrichtung nach einem der Ansprüche 1 bis 7, dadurch gekenntzeichnet, dass das freie Ende einer der Achsen eine Kolbenstange (29) aufweist, die an einen Kolben eines Zylinders (30) angelenkt ist, der in einem der Ständer (2a) des Tragkastens (1) angeordnet ist.

9. Vorrichtung nach einem der Ansprüche 1 bis 8, **dadurch gekennzeichnet, dass** sie einen Deckel (32) aufweist, der den herausnehmbaren Behälter (15) abdeckt und an den Tragkasten (1) angesenkt ist.

## Claims

1. A cooking and/or frying device, particularly intended for collective catering or the like, comprising at least one frame (1) formed of two vertical columns (2a, 2b) connected by a back wall (3) and forming a box for supporting a cooking and/or frying vessel (5), said vessel (5) being pivotally assembled on the support box (1) between the columns (2a, 2b), so-called tilting means cooperating with the vessel (5) to have it tilt from a so-called cooking position where the aperture of the vessel (5) is facing upwards to a so-called emptying position where the aperture of the vessel (5) is positioned towards the front of the support box (1) and conversely, and heating means capable of heating the content of the vessel, wherein the vessel (5) is formed of at least one substantially parallelepipedal box (9) comprising a back wall (10) and four lateral walls (11, 12, 13, 14) having their upper edge supporting a removable cooking dray (15), two opposite lateral walls (12, 14) of the box (9) respectively comprising a pin (18, 19) respectively supported by a bearing (20, 21) rigidly attached to a column (2a, 2b), at least one of the columns (2a) receiving an electric frequency control generator (7) capable of generating an electric voltage transmitted by a feed wire (8) to at least one induction coil positioned in the box (9) so that the axis of the electromagnetic flow generated by said coil is directed towards the inside of the cooking dray (15), the pin (18) supported by the bearing (20) of the column (2a) receiving the generator (7) being hollow to allow the passing of said feed wire (8).

2. The device of the foregoing claim, ***characterized in that*** the back wall (10) of the box (9) comprises at least one slot (22) and at least one fan (23) rigidly attached to the back wall (10), extending in the box (9), and extending perpendicularly to said slot (22).

3. The device of claim 2, ***characterized in that*** the back wall (10) comprises at least one filter (24) arranged in a housing (25) rigidly attached to the external surface of the back wall (10) and extending perpencticularly to the fan (23).

4. The device of any of claims 1 to 3, ***characterized in that*** the back wall (10) of the box (9) comprises at least one second slot (26) covered with a grid (27) provided with a plurality of vents (28), said grid (27) provided with vents (28) being rigidly attached to the external surface of the back wall (10) of the box (9).

5. The device of claim 4, ***characterized in that*** said vents (28) are directed towards the front surface of the box (9) forming the vessel (5).

6. The device of any of claims 1 to 5, ***characterized in that*** the back wall (10) of the box (9) and the lateral walls (11, 12, 13, 14) are rigidly attached to a parallelepipedal frame (17) having two opposite sides supporting the rotation pins (18, 19) of the vessel (5).

7. The device of any of claims 1 to 6, ***characterized in that*** the removable dray(15) comprises a spout (16) on the upper edge of its front surface.

8. The device of any of claims 1 to 7, ***characterized in that*** the free send of one of the pins comprises a connecting rod (29) jointed to a piston of a cylinder (30) positioned in one of the columns (2a) of the support box (1).

9. The device of any of claims 1 to 8, ***characterised in that*** it comprises a lid (32) capable of covering the removable dray (15) and jointed to the support box (1).
